(19)

Europäisches Patentamt

European Patent Office

Office européen des brevets

(11) **EP 4 538 822 A1**

(12) **EUROPEAN PATENT APPLICATION**
published in accordance with Art. 153(4) EPC

(43) Date of publication:
**16.04.2025 Bulletin 2025/16**

(21) Application number: **23818862.7**

(22) Date of filing: **05.05.2023**

(51) International Patent Classification (IPC):
***G05D 1/02*** (2020.01)

(86) International application number:
**PCT/CN2023/092342**

(87) International publication number:
**WO 2023/236697 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.06.2022 CN 202210635841**

(71) Applicant: **Qfeeltech (Beijing) Co., Ltd.
Beijing 100080 (CN)**

(72) Inventors:
• **GAO, Wangshu
Beijing 100080 (CN)**
• **ZHANG, Shitong
Beijing 100080 (CN)**

(74) Representative: **Novagraaf International SA
Chemin de l'Echo 3
1213 Onex, Geneva (CH)**

(54) **CHARGING METHOD AND APPARATUS FOR AUTONOMOUS MOBILE DEVICE**

(57) The present disclosure provides a recharging method and apparatus for an autonomous mobile device. The method includes determining a search zone of the autonomous mobile device, and emitting a laser toward the search zone; determining a sub-zone in the search zone that reflects the laser as a candidate zone; determining a target zone based on the candidate zone, wherein, light intensities of reflected lights reflected by an identifier in the target zone are within a pre-set light intensity range; wherein determining the target zone based on the candidate zone, includes: determining reflection points in the candidate zone, wherein, the reflection points are points where the laser impinging onto the identifier is reflected by the identifier, wherein light intensities of reflected lights corresponding to the reflection points are within the pre-set light intensity range; obtaining a rating score of the identifier; determining that the candidate zone is the target zone when the rating score is within a pre-set score range.

FIG. 2

**EP 4 538 822 A1**

**Description**

The present disclosure claims priority to Chinese Patent Application No. 202210635841.4, filed on June 7, 2022, in Chinese Patent Office, and titled "RECHARGING METHOD AND APPARATUS FOR AUTONOMOUS MOBILE DEVICE," the entire content of which is incorporated herein by reference.

TECHNICAL FIELD

The present disclosure relates to autonomous mobile device technology, and in particular, to a recharging method and apparatus for an autonomous mobile device.

BACKGROUND TECHNOLOGY

A floor sweeping an autonomous mobile device is a commonly used smart home appliance, which can autonomously move in a room to perform cleaning tasks of a floor. This type of autonomous mobile device is typically equipped with functions such as route planning, autonomous return to a charging station for charging, and human-machine interfaces, etc.

In order to increase the usage efficiency of an autonomous mobile device, a charging station may be provided for the autonomous mobile device. When an electric power of the autonomous mobile device is insufficient, the autonomous mobile device can autonomously search for the charging station to perform charging.

In the process of the autonomous mobile device returning to the charging station to perform charging, the autonomous mobile device may return to the charging station to perform charging based on a location of the charging station in a pre-set map generated through scanning. However, when the location of the charging station in the map stored in the autonomous mobile device is possibly different from the location of the charging station in the actual space, for example, the autonomous mobile device starts a cleaning task after it is started up, and a user abruptly changes the location of the charging station before the autonomous mobile device completes the cleaning task, at this moment, the location of the charging station in the map created by the autonomous mobile device is wrong, and the autonomous mobile device may not be able to find the charging station to perform charging. As another example, after the autonomous mobile device is started up, due to environmental factors such as a carpet in the space in which the autonomous mobile device is located, a relatively large localization error may be generated in a localization system of the autonomous mobile device. When the electric power of the autonomous mobile device is lower than a pre-set electric power or when the cleaning task is completed, the autonomous mobile device may not be able to find the charging station to perform charging. In addition, if the autonomous mobile device is moved to another zone during a cleaning process, the map detected at this moment by the autonomous mobile device may not match the previously created map, a failure may occur to the localization of the autonomous mobile device, and a new map may need to be created. The re-created map may not include a location of the charging station. When the electric power of the autonomous mobile device is lower than the pre-set electric power or when the cleaning task is completed, the autonomous mobile device may not be able to find the charging station to perform charging. As can be seen that an issue exists in which the autonomous mobile device may not be able to receive timely charging.

CONTENT OF INVENTION

The present disclosure provides a recharging method and apparatus for an autonomous mobile device, in order to solve problems relating to the charging of the autonomous mobile device.

One aspect is a recharging method for the autonomous mobile device, which includes:

determining a search zone of the autonomous mobile device, and emitting a laser toward the search zone;
determining a sub-zone in the search zone that reflects the laser as a candidate zone;
determining a target zone based on the candidate zone, wherein, light intensities of reflected lights reflected by an identifier in the target zone are within a pre-set light intensity range;
wherein determining the target zone based on the candidate zone, includes:

determining reflection points in the candidate zone, wherein, the reflection points are points where the laser impinging onto the identifier is reflected by the identifier, wherein light intensities of reflected lights corresponding to the reflection points are within the pre-set light intensity range;
obtaining a rating score of the identifier;
determining the candidate zone as the target zone when the rating score is within a pre-set score range;
wherein, obtaining the rating score of the identifier includes:

obtaining the rating score based on the determined light intensities of the reflected lights corresponding to the reflection points and based on weights of the reflection points.

As an optional embodiment, wherein obtaining the rating score based on the determined light intensities of the reflected lights corresponding to the reflection points and based on the weights of the reflection points, includes: determining the rating score f based on the light intensities J of the reflected lights corresponding to the reflection points, a penalty value T, the weights of the reflection points and a constant coefficient K, wherein the weights of the reflection points are Euclidean distances Range from the reflection points to an origin, wherein, the rating score f is:

$$f = \sum_{1}^{n} f_i \times Range_i = \sum_{1}^{n} J_i \times (1 - \frac{T}{K}) \times Range_i$$

As an optional embodiment, wherein obtaining the rating score based on the determined light intensities of the reflected lights corresponding to the reflection points and based on the weights of the reflection points, includes: determining the rating score based on the light intensities J of the reflected lights corresponding to the reflection points and based on the weights of the reflection points, wherein the weights of the reflection points are the Euclidean distances Range from the reflection points to the origin, wherein, the rating score f is:

$$f = \sum_{1}^{n} f_i = \sum_{1}^{n} [J_i - \frac{\sum_{1}^{n} J_i}{n}] \times Range_i$$

As an optional embodiment, before obtaining the rating score of the identifier, the recharging method also includes:

determining a first length of a straight line formed by the reflection points;
obtaining the rating score of the identifier when the first length is within a first pre-set length range.

As an optional embodiment, before obtaining the rating score of the identifier, the recharging method also includes:
obtaining the rating score of the identifier when a first quantity of the reflection points is greater than a first pre-set quantity.
As an optional embodiment, wherein obtaining the rating score of the identifier when the quantity of the reflection points is greater than the first pre-set quantity, includes:

determining a geometric feature formed by the reflection points when the first quantity of the reflection points is greater than the first pre-set quantity;
obtaining the rating score of the identifier when a degree of similarity degree between the geometric feature and a pre-set geometric feature is greater than a pre-set degree of similarity.

As an optional embodiment, the geometric shape feature includes a fitted straight line.
As an optional embodiment, wherein determining the reflection points in the candidate zone, includes:

determining a plurality of groups of reflection points in the candidate zone, wherein, light intensities of reflected lights corresponding to reflection points included in each group of reflection points are within a same light intensity range, the reflection points in each group of reflection points are adjacent to one another, light intensity ranges corresponding to two adjacent groups of reflection points are different, and the light intensities of the reflected lights corresponding to the reflection points in each group of reflection points are within a pre-set light intensity range.
determining whether each group of reflection points satisfies a pre-set condition;
obtaining the rating score of the identifier when each group of reflection points satisfies the pre-set condition;
wherein determining whether each group of reflection points satisfies the pre-set condition, includes:

determining a first light strip formed by the reflection points included in each group of reflection points;
determining that each group of reflection points satisfies the pre-set condition when a first arrangement formed by a plurality of first light strips is a first pre-set arrangement.

As an optional embodiment, wherein determining that each group of reflection points satisfies the pre-set condition when the first arrangement formed by the plurality of first light strips is the first pre-set arrangement, includes:

obtaining a second quantity of the reflection points included in each of the first light strips when the first arrangement formed by the plurality of first light strips is the first pre-set arrangement;

determining a first light strip corresponding to a second quantity that is greater than a second pre-set quantity as a standard light strip;

determining that each group of reflection points satisfies the pre-set condition when a ratio between a quantity of standard light strips and a total quantity of the first light strips is within a pre-set ratio range.

As an optional embodiment, wherein after determining the sub-zone in the search zone that reflects the laser as the candidate zone, the recharging method also includes:

when all candidate zones are not the target zone, controlling the autonomous mobile device to move for a pre-set distance and to return to execute the step of determining the search zone of the autonomous mobile device.

As an optional embodiment, after obtaining the rating score of the identifier, the recharging method also includes: when the rating score is not within the pre-set score range, repeating determination of the search zone based on the target zone, and returning to execute the step of emitting the laser toward the search zone.

Another aspect is an autonomous mobile device, which includes:

a determination module, configured to determine a search zone of the autonomous mobile device, and emit a laser toward the search zone;

wherein the determination module is configured to determine a sub-zone in the search zone that reflects the laser as a candidate zone;

wherein the determination module is also configured to determine a target zone based on the candidate zone, wherein, light intensities of reflected lights reflected by an identifier in the target zone are within a pre-set light intensity range, to determine reflection points in the candidate zone, wherein, the reflection points are points where the laser impinging onto the identifier is reflected by the identifier, wherein light intensities of reflected lights corresponding to the reflection points are within the pre-set light intensity range;

an obtaining module, configured to obtain a rating score of the identifier, wherein, the rating score is obtained based on the determined light intensities of the reflected lights corresponding to the reflection points and based on weights of the reflection points.

Another aspect is an autonomous mobile device, which includes a storage device and a processor;

wherein the storage device stores computer-executable instructions;

wherein the processor executes the computer-executable instructions stored in the storage device, to enable the processor to execute the recharging method for the autonomous mobile device described in any of the above solutions.

Another aspect is a computer-readable storage medium, wherein the computer-readable storage medium stores computer-executable instructions, wherein when the computer-executable instructions are executed by a processor, the recharging method for the autonomous mobile device described in any of the above solutions is implemented.

Another aspect is a computer program product, including a computer program, wherein when the computer program is executed by a processor, the recharging method for the autonomous mobile device described in any of the above solutions is implemented.

The present disclosure provides a recharging method and apparatus for an autonomous mobile device. The autonomous mobile device determines a search zone, and emits a laser toward the search zone, and determines a sub-zone in the search zone that reflects the laser as a candidate zone, and determines, based on the candidate zone, a target zone in which the identifier associated with light intensities of reflected lights greater than a pre-set light intensity is located. Then a rating score of the identifier is obtained. When the rating score matches a pre-set score range, then it may be determined that the identifier is a charging station. Then the autonomous mobile device may move to the location of the identifier to perform charging. In the present disclosure, the autonomous mobile device first obtains the candidate zone in which the identifier reflecting the light is located, and then determines the target zone based on the light intensities of the reflected lights. Further, when the rating score of the identifier located in the target zone matches the pre-set score zone, it may be accurately determined that the identifier in the target zone is the charging station, thereby enabling the autonomous mobile device to accurately find the charging station in the space, such that the autonomous mobile device can perform timely charging.

DESCRIPTIONS OF ACCOMPANYING DRAWINGS

The accompanying drawings are included in the specification as parts of the specification, which show embodiments consistent with the present disclosure, and are used together with the specification to explain the principles of the present disclosure.

FIG. 1 is a schematic illustration of a charging scene of an autonomous mobile device of the present disclosure;
FIG. 2 is a schematic illustration of a flowchart of a recharging method for the autonomous mobile device according to a first embodiment of the present disclosure;
FIG. 2-1 is a schematic illustration of calculating a rating score by the autonomous mobile device of the present disclosure;
FIG. 2-2 is another schematic illustration of calculating the rating score by the autonomous mobile device of the present disclosure;
FIG. 3 is a schematic illustration of emitting a laser by the autonomous mobile device of the present disclosure;
FIG. 4 is a schematic illustration of a flowchart of the recharging method for the autonomous mobile device according to a second embodiment of the present disclosure;
FIG. 5 is a schematic illustration of a flowchart of the recharging method for the autonomous mobile device according to a third embodiment of the present disclosure;
FIG. 6 is a schematic illustration of a geometric feature involved in the present disclosure;
FIG. 7 is a schematic illustration of a flowchart of the recharging method for the autonomous mobile device according to a fourth embodiment of the present disclosure;
FIG. 8 is a schematic illustration of a hardware structure of the autonomous mobile device of the present disclosure.

Through the above accompanying drawings, embodiments of the present disclosure are explicitly illustrated, which are also described in detail in the following descriptions. These accompanying drawings and descriptions are not intended to limit the scope of the idea of the present disclosure in any manner, but are intended to explain the concept of the present disclosure to a person having ordinary skills in the art through reference to specific embodiments.

DETAILED IMPLEMENTATIONS

Here illustrative embodiments will be explained in detail, examples of which are shown in the accompanying drawings. When the following descriptions involve accompanying drawings, unless otherwise noted, the same number in different accompanying drawings represents the same or similar elements. The implementations described in the following illustrative embodiments do not represent all implementations consistent with the present disclosure. Conversely, they are merely examples of the apparatus and method described in detail in the accompanying claims that are consistent with some aspects of the present disclosure.

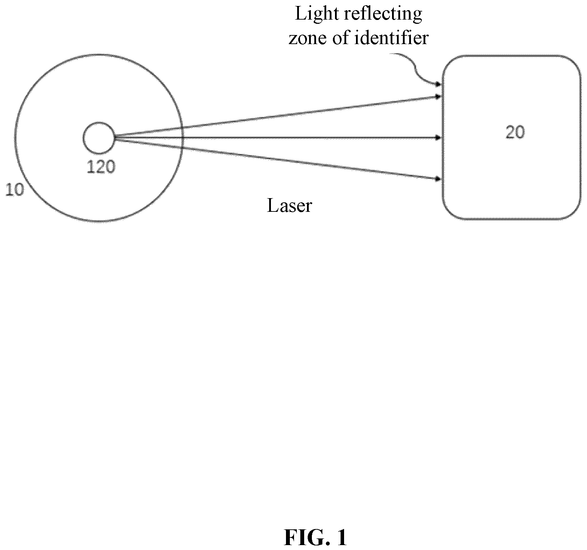

The present disclosure provides a recharging method for an autonomous mobile device. Referring to FIG. 1, FIG. 1 is a schematic illustration of a charging scene of the autonomous mobile device. An autonomous mobile device 10 may be a mobile and rechargeable device. For example, the autonomous mobile device may be a floor sweeping robot, a cleaning robot, a voice robot, etc. The autonomous mobile device 10 may be provided with one or more light detection and ranging devices (Lidar devices) 120. When the autonomous mobile device needs to be recharged, it may control the Lidar devices 120 to emit a laser to search for a charging station 20. The charging station 20 may be provided with one or more identifiers, e.g., light reflecting zones, and the material of the light reflecting zones is a light reflecting material. After the laser emitted by the autonomous mobile device 10 is reflected by the light reflecting zone, coordinates of points that reflect the laser may be detected by a detecting assembly (not shown) included in the autonomous mobile device 10. The autonomous mobile device 10 may determine a profile, a pattern based on the coordinates of the points that reflect the laser or may rate the identifier based on the reflecting points, and may determine a direction of the charging station based on the identifier. Then the autonomous mobile device 10 may move to a location of the identifier to perform charging.

In the following descriptions, the technical solutions of the present disclosure and how the technical solutions of the present disclosure solve the above technical problems will be explained in detail using specific embodiments. The specific embodiments described below may be combined. The same or similar concept or processes may not be repeatedly described in some embodiments. Next, with reference to the accompanying drawings, the embodiments of the present disclosure will be described.

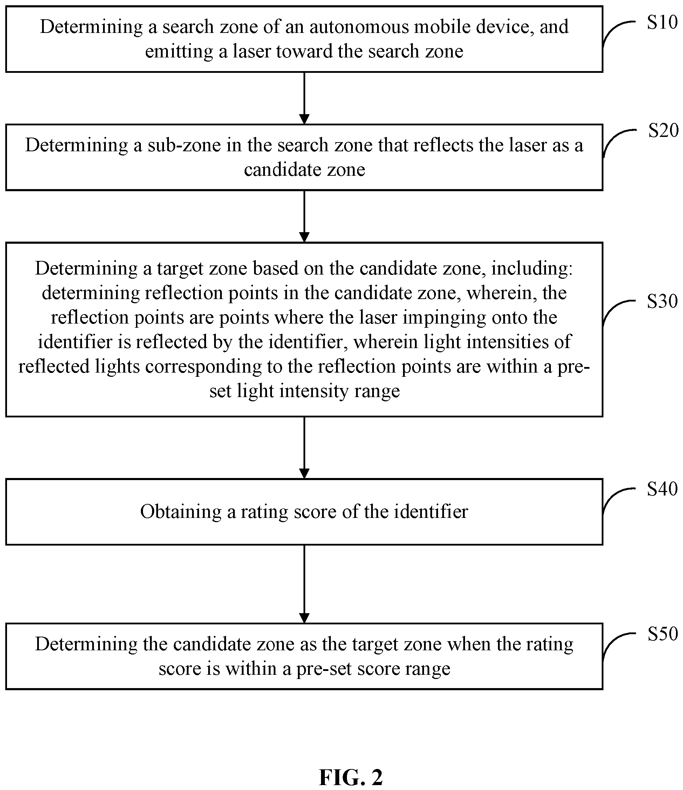

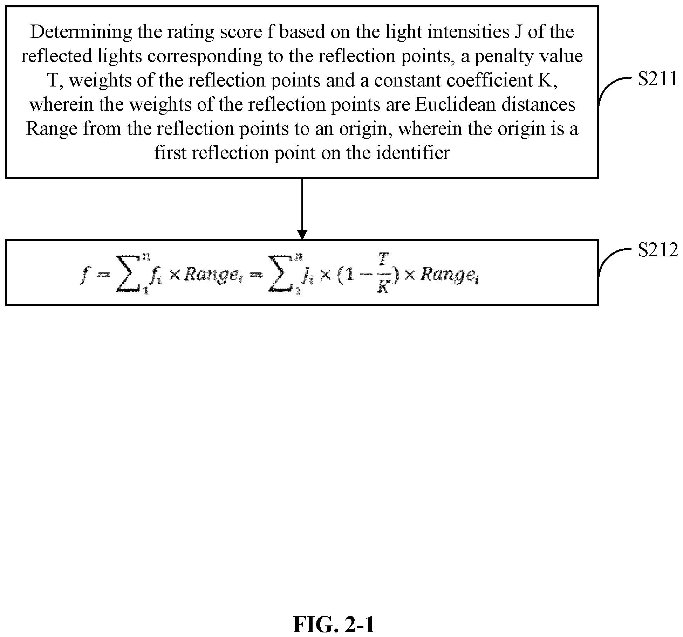

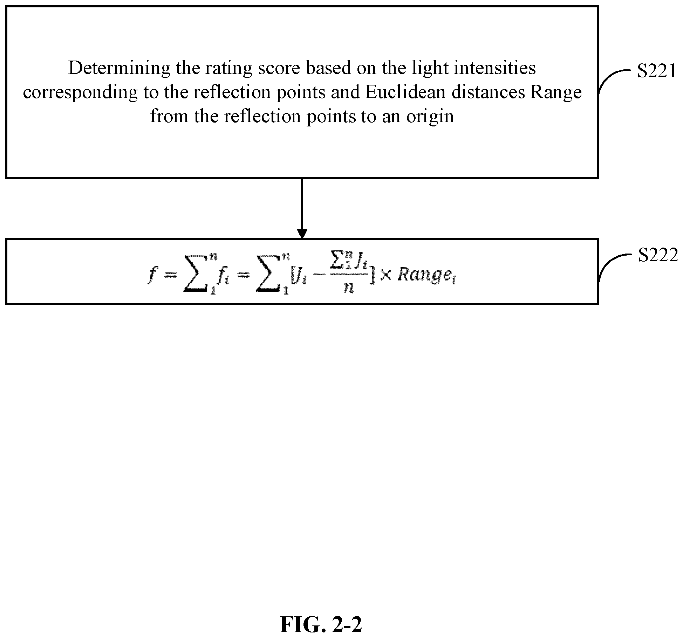

Referring to FIG. 2, FIG. 2 is a first embodiment of the recharging method for the autonomous mobile device, the recharging method for the autonomous mobile device may include:

Step S10, determining a search zone of the autonomous mobile device, and emitting a laser toward the search zone.

In this embodiment, the executing body is the autonomous mobile device. The autonomous mobile device may be a mobile and rechargeable device. For example, the autonomous mobile device may be a floor sweeping robot, a cleaning robot or a voice robot configured to provide assistance. For the convenience of descriptions, the autonomous mobile device is simply referred to as a device.

When the device is in a movement, if the electronic power of the device is relatively low, the device may move to a stored location of the charging station to perform charging. If the actual location of the charging station is different from the location of the charging station stored in the device, for example, the charging station may have been moved by a user, or, the location of the charging station obtained through localization and stored in the device is not accurate due to environmental factors, the device may find the charging station to perform charging through searching for an identifier of the charging station.

In this embodiment, the device may use a Lidar device that has a lower cost to search for the charging station. Specifically, the device may first move to a location adjacent to a stored location of the charging station. Because the localization of the charging station performed by the device may be interfered by reasons such as sensors, slippery floor or manual interference, but the error is typically not too large, therefore, a probability of the charging station existing in the zone that includes the location is relatively high. As such, the zone that includes the stored location of the charging station may be used as the search zone of the device to search for the charging station.

The device may move to the search zone, and may control each Lidar device to emit lasers toward the search zone.

Step S20, determining a sub-zone in the search zone that reflects the laser as a candidate zone.

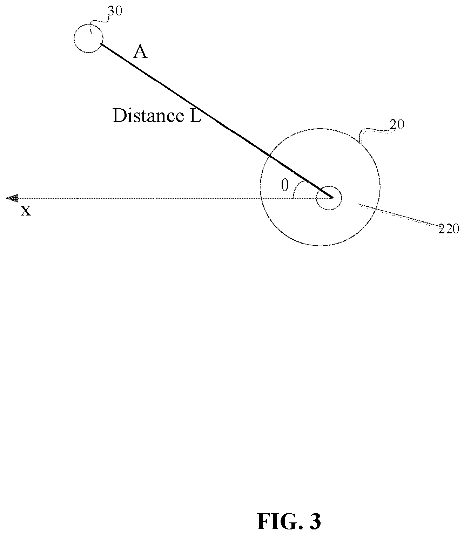

After the Lidar device emits the laser, the device may obtain, in real time, spatial data information to obtain a detection data set. Because the Lidar device acquires information data from the environment only when the Lidar device rotates, the acquired spatial data information may be a set acquired when the Lidar device rotates for a certain angle, or may be historical data set or data acquired in real time by the Lidar device during a time period of movement of the device (when the device moves, the Lidar device will rotate). The data acquired by the device include distance values, light intensities and angles. The angle is an angle of an object in a sub-zone relative to the device. Specifically, referring to FIG. 3, the angle of an object 30 in the sub-zone relative to the device 20, may be determined based on a relative location of the object 30 relative to a detecting assembly 220 of the device 20. That is, an angle formed by a connecting line A between the object 30 and the detecting assembly 220 and a horizontal direction X is an angle $\theta$ between the object 30 and the device 20, and a distance value L is a distance between the object 30 of the sub-zone and the device 20, the light intensity is the light intensity of the laser reflected by the object 30 of the sub-zone.

After the device emits the laser, the device may synchronously receive the reflected laser, and determine a zone that reflects the laser through the reflected laser. An identifier may be provided on the charging station. The identifier may reflect the laser. Therefore, the device may determine a sub-zone that reflects the laser as a candidate zone. It should be noted that the search zone may be divided into multiple sub-zones. The device may emit a laser toward each sub-zone. If the device detects that a sub-zone reflects the laser, that sub-zone may be determined as a candidate zone. An outer housing of the charging station may be entirely configured as the identifier, or a partial zone on the outer housing of the charging station may be set as the identifier.

Step S30, determining a target zone based on the candidate zone, including: determining reflection points in the candidate zone, where, the reflection points are points where the laser impinging onto the identifier is reflected by the identifier, the light intensities of the reflected lights corresponding to the reflection points are within a pre-set light intensity range.

The material of the identifier of the charging station may be a special light reflecting material that forms a light reflecting zone, and the device may store a light intensity range of the reflected laser light reflected by the identifier. This light intensity range may be defined as the pre-set light intensity range. That is, the device may store the pre-set light intensity range.

There may be multiple candidate zones. The device may need to determine a target zone from the candidate zones. Specifically, the device may detect the light intensity of the reflected light reflected by the sub-zone, and may store the light intensity and the sub-zone in correlation with one another. That is, the device may store the light intensity correlated with each candidate zone. If the light intensity is within the pre-set light intensity range, the device may determine the candidate zone as the target zone.

In addition, every time after the device determines a sub-zone, the device may first determine whether the sub-zone is a target zone. After the device determines a next sub-zone, it may again determine whether the sub-zone is a target zone. If two target zones are consecutively determined, then probabilities of a charging station existing in the two target zones are compared, and a target zone with a relatively lower probability may be discarded. Through this method, the device may eventually obtain a target zone with the highest probability of having a charging station.

It should be noted that when each candidate zone is not a target zone, that is, when it determines that there is no charging station existing in the current search zone, then the autonomous mobile device may be controlled to move for a pre-set distance, and the autonomous mobile device may repeat the determination of the search zone, i.e., return to execute step S10.

Step S40, obtaining a rating score of the identifier; where, obtaining the rating score of the identifier includes: obtaining the rating score based on the determined light intensities of the reflected lights corresponding to the reflection points and based on weights of the reflection points. The rating score reflects a degree of matching between the candidate zone and the identifier. The higher the rating score, the higher the degree of matching, and the higher the likelihood that the candidate zone is a target zone.

Step S50, when the rating score is within a pre-set score range, determining the candidate zone as the target zone.

The rating score is a mathematical processing of a feature of the identifier, is a numerical value for determining a degree of similarity between the detected location and identifier. When the rating score is within a reasonable pre-set score range, it may be determined that the candidate zone is a target zone.

It should be understood that when the autonomous mobile device determines that the rating score of the identifier matches the pre-set score range corresponding to the current relative angle, the autonomous mobile device may move toward the location of the identifier for a pre-set distance. The device may repeat obtaining the relative angle, and the device may again return to execute steps S10 - S50, and again perform localization of the charging station so as to move for the pre-set distance. Such processes may be cyclically performed, until the device ultimately moves to the charging station.

In the technical solution of this embodiment, the autonomous mobile device determines a search zone, and emits a laser toward the search zone, and determines a sub-zone in the search zone that reflects the laser as a candidate zone. In addition, the device may determine, based on the candidate zone, a target zone in which the identifier associated with a light intensity of a reflected light higher than a pre-set light intensity is located. Then the device may obtain a rating score of the identifier. When the rating score matches a pre-set score range, it may be determined that the identifier is a charging station. The autonomous mobile device may move to the location of the identifier to perform charging. In the present disclosure, the autonomous mobile device may first obtain a candidate zone that includes the identifier that reflects the light, and then determines a target zone based on a light intensity of the reflected light. In addition, when the rating score of the identifier in the target zone matches the pre-set score range, it can be accurately determined that the identifier in the target zone is a charging station, such that the autonomous mobile device can accurately find the charging station in the space, thereby enabling the autonomous mobile device to perform timely charging.

The rating score may be obtained through the following solution:

On the basis of the above embodiment, as shown in FIG. 2-1,
Step S211, the rating score f may be determined based on light intensities J of the reflected lights corresponding to the reflection points, a penalty value T, the weights of the reflection points and a constant coefficient K, wherein the weights of the reflection points are Euclidean distances Range from the reflection points to an origin, where the origin may be the first reflection point on the identifier.

Step S212, the rating score may be

$$f = \sum_{1}^{n} f_i \times Range_i = \sum_{1}^{n} J_i \times (1 - \frac{T}{K}) \times Range_i$$

Here, the rating score is determined based on parameters of the reflection points, and the parameters of the reflection points are determined based on the relative location of the autonomous mobile device relative to the identifier, which is the relative location of the autonomous mobile device relative to the charging station. When the autonomous mobile device continuously approaches and straightly faces the charging station, the rating score infinitely approaches the maximum value.

When the rating score is within the pre-set score range, the candidate zone may be determined as the target zone.

In the technical solution of this embodiment, by introducing a penalty value, the rating score of the candidate zone may be determined based on the penalty score of the reflection points, thereby enabling accurate determination of whether the candidate zone is a target zone based on the rating score.

As shown in FIG. 2-2, in another embodiment,

Step S221, determining the rating score based on the light intensities J corresponding to the reflection points and based on the Euclidean distance Range between the reflection points and the origin. Here, the origin may be the first reflection point on the identifier.

Step S222, the rating score equals to a sum of a product of a difference between the light intensity of each reflection point and an average light intensity and a distance between the reflection point and the origin, at all reflection points. The formula is:

$$f = \sum_1^n Di = \sum_1^n [Ji - \frac{\sum_1^n Ji}{n}] \times Rangei$$

It should be noted that, when the autonomous mobile device approaches and straightly faces the charging station, i.e., when the distance between the autonomous mobile device and the charging station gradually reduces, the rating score of a certain candidate zone scanned by the autonomous mobile device constantly increases. Then the autonomous mobile device may move toward a candidate zone whose rating score constantly increases (this zone is the target zone), until the autonomous mobile device straightly faces the charging station, and perform charging.

It should be noted that after the autonomous mobile device scans the candidate zone, if the current rating score of this candidate zone constantly increases as compared to the historical rating score, then this candidate zone may be directly determined as the target zone.

Due to the introduction of the rating score solution, the identifier is not limited to having only two distinguishing zones, which are the bright and dark zones, and may take more formats, for example, bright, medium, dark. The light reflecting identifier in any format may obtain a corresponding rating score.

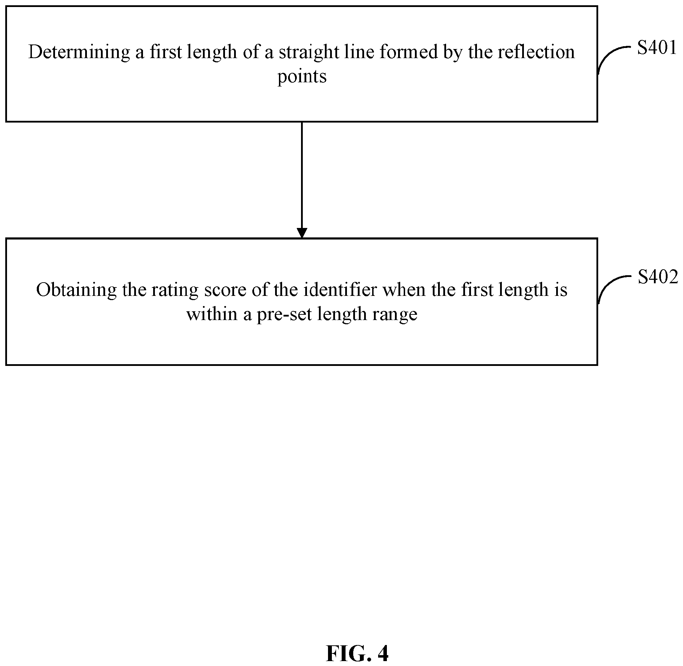

Referring to FIG. 4, FIG. 4 is a second embodiment of the recharging method for the autonomous mobile device of the present disclosure. Based on the first embodiment, step S30 may include:

In the above embodiment, reflection points have already been determined in the candidate zone. Here, the reflection points are points where the laser impinging onto the identifier is reflected by the identifier. The light intensities of the reflected lights corresponding to the reflection points are within the pre-set light intensity range.

In this embodiment, the candidate zone includes multiple points that reflect the laser, and these points are points on an object that can reflect light. The object may be defined as the identifier, and these points may be defined as reflection points. The light intensities correlated with the candidate zone are within the pre-set light intensity range. That is, the light intensities of the reflected lights of each reflection point are within the pre-set light intensity range. The device may extract reflection points from each candidate zone.

Step S401, determining a first length of a straight line formed by the reflection points.

In an example, points in the light reflecting zone of the charging station that reflect the laser may also form a straight line. The light reflecting zone of the identifier on the charging station has a corresponding size.

After the device obtains the reflection points, the length of the straight line formed by the reflection points may be determined based on the coordinates of the reflection points. This length may be defined as the first length. Each reflection point may be a bright point; or each reflection point may be a dark point; or a portion of the reflection points may be bright points, and another portion of the reflection points may be dark points. The light intensity of the light reflected by a bright point may be greater than a predetermined threshold value, and the light intensity of the light reflected by a dark point may be smaller than the predetermined threshold value.

Step S402, obtaining the rating score of the identifier when the first length is within a first pre-set length range.

The device may detect whether the first length is within the first pre-set length range. If the first length is within the first pre-set length range, it may be determined that the straight line formed by the reflection points is a straight line in the light reflection zone.

When the first length of the line formed by the reflection points in each candidate zone is out of the first pre-set length range, i.e., when the first length is smaller than a lower limit of the first pre-set length range or when the first length is greater than an upper limit of the first pre-set length range, it may be determined that all candidate zones are not target zones. The device may determine that there is no charging station in the current search zone. The device may move for a pre-set distance, repeat determination of the search zone, and return to execute step S10.

In the technical solution of this embodiment, the autonomous mobile device determines reflection points in the candidate zone, and determines that the first length of the straight line formed by the reflection points is within the first pre-set length range. Then the autonomous mobile device obtains the rating score of the identifier. Because the step of obtaining the rating score needs a large amount of computation, but the computation involving the determination of the first length of the reflection points is relatively simpler, here, through this step, a large number of candidate zones may be excluded, which saves computing time.

It should be noted that, because there exist different relative locations between the device and the charging station, i.e., the relative angles corresponding to different relative locations between the device and the charging station are different, when the relative angles are different, the reflection points on the identifier included in a light reflection zone on the charging station may be different, that is, the device may store first lengths of the identifier included in the light reflecting zone at different relative angles. For example, when the device straightly faces the charging station, the length formed by the profile of the identifier of the light reflecting zone on the charging station is the first length. When the relative angle between the device and the charging station is +45°, the length formed by the profile of the identifier is a second length. When the device moves to the charging station, because the relative angle between the device and the charging station may change, the device may continuously perform correction to determine the location of the charging station, until the device ultimately moves to the charging station.

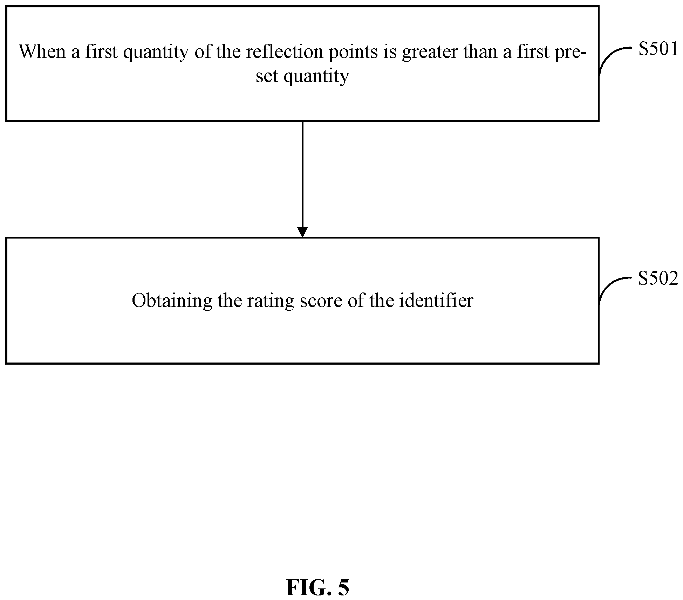

Referring to FIG. 5, FIG. 5 is a third embodiment of the recharging method for the autonomous mobile device of the present disclosure, which is based on the first embodiment. In the above embodiment, reflection points have been determined in the candidate zone. Here, the reflection points are points where a laser impinging onto the identifier is reflected by the identifier. Light intensities of the reflected lights corresponding to the reflection points are within the pre-set light intensity range.

In this embodiment, the candidate zone may include multiple reflection points, and these points may be points on an object that can reflect light. The object may be defined as the identifier, and these points may be defined as the reflection points. The reflection points may be bright points or dark points, or may include bright points and dark points simultaneously. The light intensity of the light reflected by a bright point may be greater than a predetermined threshold value, and the light intensity of the light reflected by a dark point may be smaller than the predetermined threshold value.

Step S501, determining whether a first quantity of the reflection points is greater than a first pre-set quantity.

In this embodiment, the device may store the first pre-set quantity. The first pre-set quantity refers to a minimum number of the reflection points that reflect the laser in the light reflecting zone of the identifier on the charging station. The first pre-set quantity may be any suitable quantity, for example, the first pre-set quantity may be 5.

The device may obtain a quantity for the reflection points. This quantity may be defined as the first quantity. When the first quantity is greater than the first pre-set quantity, then a basic condition of a target zone is satisfied.

When a first quantity of the reflection points in each candidate zone is smaller than or equal to the first pre-set quantity, then it may be determined that all candidate zones are not target zones. The device may determine that there is no charging station in the current search zone. The device may move for a pre-set distance, repeat determination of the search zone, and return to execute step S10.

Step S502, in this embodiment, the device obtains a quantity of the reflection points in the candidate zone. If this quantity is greater than the first pre-set quantity, the candidate zone may be a target zone, and in the next step, the rating score of the identifier may be obtained, to further perform determination on the target zone. Because the step of obtaining the rating score needs a large amount of computation, but the computation involving the determination of the first quantity of the reflection points is relatively simpler, here, through this step, a large number of candidate zones may be excluded, which saves computing time.

In order to further increase the accuracy of determining the target zone, when the first quantity of the reflection points is greater than the first pre-set quantity, a geometric feature formed by reflection points may be further determined;

When a degree of similarity between the geometric feature and a pre-set geometric feature is greater than a pre-set degree of similarity, the rating score of the identifier may be obtained.

Because the light reflecting features of the identifier are different, reflection points on the light reflecting features may be dense or may be sparse. The above geometric feature refers to the distribution of the reflection points on a straight line.

In this embodiment, when the first quantity of the flection points of the candidate zone is greater than the first pre-set quantity, the device may determine the geometric feature formed by the reflection points. The geometric feature may be a fitted straight line, that is, the device may determine the geometric feature formed by the reflection points through a fitting algorithm.

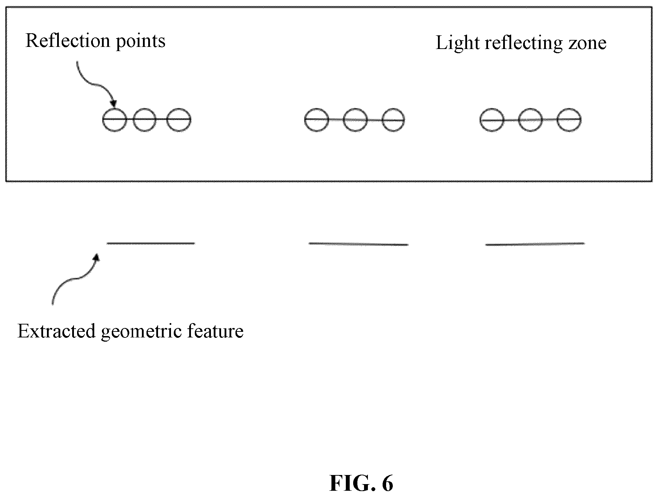

The autonomous mobile device may store a pre-set geometric feature. The pre-set geometric feature may be a geometric feature formed by the reflection points on the reflection zone of the charging station. Referring to FIG. 6, the autonomous mobile device may store a pre-set geometric feature formed by reflection points of the identifier. The autonomous mobile device may match the retrieved geometric feature with the pre-set geometric feature. When the degree of similarity between the two is greater than a pre-set degree of similarity, it may be determined that the geometric feature matches the pre-set geometric feature, and the next step may be performed, to obtain the rating score of the identifier, and to carry out further determination.

If the degree of similarity between the two is smaller than or equal to the pre-set degree of similarity, the autonomous mobile device may be controlled to move for a pre-set distance, and may repeat determination of the search zone, i.e., return to execute step S10.

In this embodiment, the reflection points of the candidate zone may be fitted, i.e., an initial determination of the candidate zone may be made, to sift out a candidate zone that is likely not a target zone, which can reduce the difficulty of subsequent computation, and increase the efficiency of computation.

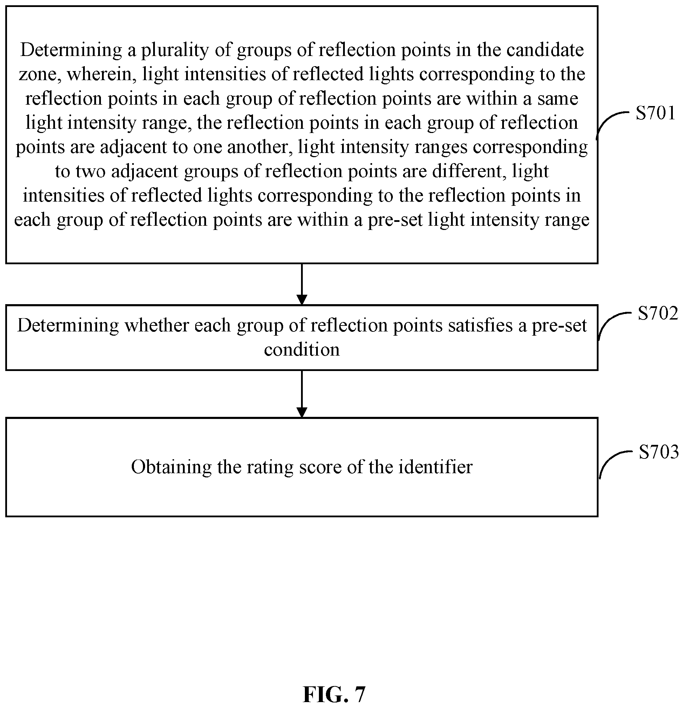

Referring to FIG. 7, FIG. 7 is a fourth embodiment of the recharging method for the autonomous mobile device of the present disclosure, which is based on the first embodiment:

Step S701, determining a plurality of groups of reflection points in the candidate zone, wherein, light intensities of reflected lights corresponding to reflection points included in each group of reflection points are within a same light intensity range, the reflection points in each group of reflection points are adjacent to one another, light intensity ranges corresponding to two adjacent groups of reflection points are different, and the light intensities of the reflected lights corresponding to the reflection points in each group of reflection points are within a pre-set light intensity range.

In this embodiment, the light reflecting zone of the identifier on the charging station may be divided into a plurality of light reflecting sub-zones, light reflecting materials of two adjacent light reflecting sub-zones may be different, that is, a light intensity of a light reflected by one light reflecting sub-zone of the two adjacent light reflecting sub-zones may be higher than a light intensity of a light reflected by another light reflecting sub-zone.

The device may determine a plurality of groups of reflection points in the candidate zone. Each group of reflection points may include multiple reflection points, and within each group, the reflection points are adjacent to one another. In addition, light intensities of reflected lights reflected by the reflection points in each group of reflection points are within a same light intensity range. Moreover, light intensity ranges corresponding to two adjacent groups of reflection points are different. In the meantime, light intensities of reflected lights reflected by reflection points included in each group of reflection points are within the pre-set light intensity range.

Step S702, determining whether each group of reflection points satisfies a pre-set condition.

The autonomous mobile device may determine whether each group of reflection points satisfies the pre-set condition.

In an example, the autonomous mobile device may determine a light strip formed by reflection points of each group of reflection points. This light strip may be defined as a first light strip, i.e., each group of reflection points forms a first light strip. The autonomous mobile device may store properties of light reflecting materials of light reflecting sub-zones in the light reflecting zone. A first pre-set arrangement of light strips formed by reflected lights reflected by light reflecting sub-zones may be set based on the properties of the light reflecting materials of the light reflecting sub-zones. The first pre-set arrangement may be strong light strip - weak light strip - strong light strip - weak light strip - strong light strip. In two adjacent first light strips, if an average light intensity of reflected lights reflected by reflection points in one first light strip is higher than an average light intensity of reflected lights reflected by reflection points in another first light strip, then the former is a strong light strip, and the latter is a weak light strip, and reflection points corresponding to the former are bright points, and reflection points corresponding to the latter are dark points.

If the first arrangement formed by a plurality of first light strips is the first pre-set arrangement, it may be determined that each group of reflection points satisfies the pre-set condition.

In another example, if the first arrangement formed by the first light strips is the first pre-set arrangement, the autonomous mobile device may need to obtain a second quantity of the reflection points included in each first light strip. The device may store a second pre-set quantity. If the second quantity of the reflection points in a first strip is greater than the second pre-set quantity, then the first light strip may be determined as a standard light strip. The device may calculate a ratio between a quantity of the standard light strips and a total quantity of the first light strips. If the ratio is within a pre-set ratio range, it may be determined that each group of reflection points satisfies the pre-set condition.

In another example, the device may determine an arrangement of reflection points included in each group of reflection points. This arrangement may be defined as a second arrangement. The reflection points may be categorized as bright points and dark points. A light intensity of a light reflected by a bright point is greater than a predetermined threshold value, and a light intensity of a light reflected by a dark point is smaller than the predetermined threshold value. The device may store a second pre-set arrangement. The second pre-set arrangement may be, for example: bright-dark-dark-bright-dark-bright-bright. If the second arrangement is the second pre-set arrangement, it may be determined that each group of reflection points satisfies the pre-set condition. If the second arrangement is not the second pre-set arrangement, it may be determined that each group of reflection points does not satisfy the pre-set condition.

If each group of reflection points satisfies the pre-set condition, then step 703 may be executed, to obtain a rating score of the identifier. In the above steps, an initial determination is made on the candidate zone, and a candidate zone that is likely not the target zone is sifted out, which can reduce the difficulty of subsequent computation, and increase the efficiency of computation. If each group of reflection points does not satisfy the pre-set condition, the autonomous mobile device may be controlled to move for a pre-set distance, and to repeat determination of the search zone, i.e., return to execute step S10.

It should be noted that, the embodiments shown in FIG. 2 to FIG. 8 relate to how to determine that a candidate zone is a target zone. When it is determined using one method that a candidate zone is not a target zone, one or more other methods may be used to determine whether the candidate zone is a target zone. That is, the methods for determining whether the candidate zone is a target zone as described in the embodiments shown in FIG. 2 to FIG. 8 may be combined in any suitable manner, the descriptions of which are not repeated. In addition, in order to describe each embodiment, the reflection points may be all bright points or all dark points, or may include both bright points and dark points.

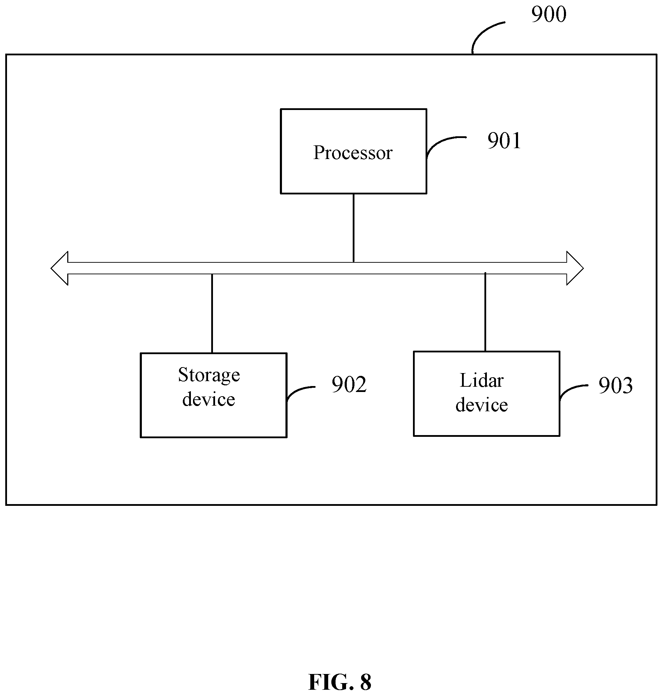

FIG. 8 is a diagram of an autonomous mobile device according to an illustrative embodiment.

Referring to FIG. 8, an autonomous mobile device 900 may include: a processor 901, such as a CPU, a storage device 902 and a Lidar device 903. A person having ordinary skills in the art can understand that, the structure shown in FIG. 8 does not limit the autonomous mobile device, and may include more or less components than what is shown, or some components may be combined, or components may have a different configuration. The storage device 902 may be realized using a non-transitory or transitory storage device or any combination thereof, such as a static random access memory (SRAM), an electrically erasable programmable read only memory (EEPROM), an erasable programmable read only memory (EPROM), a programmable read only memory (PROM), a read only memory (ROM), a magnetic storage device, a flash storage device, a magnetic disk or an optical disk.

The processor 901 may retrieve a computer program stored in the storage device 902, to execute all or some of the steps of the above-described recharging methods for the autonomous mobile device.

A non-transitory computer-readable storage medium is provided, when instructions in the storage medium are executed by a processor of the autonomous mobile device, the instructions may cause the autonomous mobile device to execute the above-described recharging methods for the autonomous mobile device.

A computer program product is provided, including a computer program, when the computer program is executed by a processor of the autonomous mobile device, the computer program may cause the autonomous mobile device to execute the above-described recharging methods for the autonomous mobile device.

Multiple determination conditions regarding identifying the identifier are provided in the present disclosure. It can be understood that these determination conditions may be implemented individually, or may be combined with one another to increase the accuracy of identification.

After a person having ordinary skills in the art considers the specification and practices the disclosed invention, it becomes easier for the person to conceive other implementation solutions of the present disclosure. The present disclosure is intended to cover any variations, usages or adaptive changes of the present disclosure. Such variations, usages or adaptive changes follow the basic principle of the present disclosure and include well-known knowledge or commonly used technical means that are not described in the present disclosure. The specification and the embodiments are merely illustrative. The true scope and spirit of the present disclosure are defined in the following claims.

It should be understood that the present disclosure is not limited to the exact structures described above and shown in the figures, and can have various modifications and changes without deviating from its scope. The scope of the present disclosure is only limited by the accompanying claims.

**Claims**

1. A recharging method for an autonomous mobile device, **characterized in that**, comprising:

   determining a search zone of the autonomous mobile device, and emitting a laser toward the search zone;
   determining a sub-zone in the search zone that reflects the laser as a candidate zone;
   determining a target zone based on the candidate zone, wherein, light intensities of reflected lights reflected by an identifier in the target zone are within a pre-set light intensity range;
   wherein determining the target zone based on the candidate zone, comprises:

      determining reflection points in the candidate zone, wherein, the reflection points are points where the laser impinging onto the identifier is reflected by the identifier, wherein light intensities of reflected lights corresponding to the reflection points are within the pre-set light intensity range;
      obtaining a rating score of the identifier;
      determining that the candidate zone is the target zone when the rating score is within a pre-set score range;

   wherein, obtaining the rating score of the identifier includes:
   obtaining the rating score based on the determined light intensities of the reflected lights corresponding to the reflection points and based on weights of the reflection points.

2. The recharging method for the autonomous mobile device according to claim 1, **characterized in that**, wherein obtaining the rating score based on the determined light intensities of the reflected lights corresponding to the reflection points and based on weights of the reflection points, comprises:
   determining the rating score f based on the light intensities J of the reflected lights corresponding to the reflection points, a penalty value T, the weights of the reflection points and a constant coefficient K, wherein the weights of the reflection points are Euclidean distances Range from the reflection points to an origin, wherein, the rating score f is:

$$f = \sum_{1}^{n} f_i \times Range_i = \sum_{1}^{n} J_i \times \left(1 - \frac{T}{K}\right) \times Range_i$$

.

22

3. The recharging method for the autonomous mobile device according to claim 1, **characterized in that**, wherein obtaining the rating score based on the determined light intensities of the reflected lights corresponding to the reflection points and based on weights of the reflection points, comprises:
determining the rating score based on the light intensities J of the reflected lights corresponding to the reflection points and based on the weights of the reflection points, wherein the weights of the reflection points are Euclidean distances Range from the reflection points to an origin, wherein, the rating score f is:

$$f = \sum_{1}^{n} f_i = \sum_{1}^{n} [J_i - \frac{\sum_{1}^{n} J_i}{n}] \times Range_i$$.

4. The recharging method for the autonomous mobile device according to claim 1, **characterized in that**, before obtaining the rating score of the identifier, the recharging method also comprises:

    determining a first length of a straight line formed by the reflection points;
    obtaining the rating score of the identifier when the first length is within a first pre-set length range.

5. The recharging method for the autonomous mobile device according to claim **1, characterized in that**, before obtaining the rating score of the identifier, the recharging method also comprises:
obtaining the rating score of the identifier when a first quantity of the reflection points is greater than a pre-set first quantity.

6. The recharging method for the autonomous mobile device according to claim 5, **characterized in that**, obtaining the rating score of the identifier when the first quantity of the reflection points is greater than the first pre-set quantity, comprises:

    determining a geometric feature formed by the reflection points when the first quantity of the reflection points is greater than the first pre-set quantity;
    obtaining the rating score of the identifier when a degree of similarity between the geometric feature and a pre-set geometric feature is greater than a pre-set degree of similarity.

7. The recharging method for the autonomous mobile device according to claim 6, **characterized in that**, wherein the geometric feature includes a fitted straight line.

8. The recharging method for the autonomous mobile device according to claim 1, **characterized in that**, wherein determining the reflection points in the candidate zone, comprises:

    determining a plurality of groups of reflection points in the candidate zone, wherein, light intensities of reflected lights corresponding to reflection points included in each group of reflection points are within a same light intensity range, wherein the reflection points included in each group of reflection points are adjacent to one another, wherein light intensity ranges corresponding to two adjacent groups of reflection points are different, and wherein the light intensities of the reflected lights corresponding to the reflection points included in each group of reflection points are within a pre-set light intensity range;
    determining whether each group of reflection points satisfies a pre-set condition;
    obtaining the rating score of the identifier when each group of reflection points satisfies the pre-set condition;
    wherein determining whether each group of reflection points satisfies the pre-set condition, comprises:

        determining a first light strip formed by the reflection points included in each group of reflection points;
        determining that each group of reflection points satisfies the pre-set condition when a first arrangement formed by a plurality of first light strips is a first pre-set arrangement.

9. The recharging method for the autonomous mobile device according to claim 8, **characterized in that**, wherein determining that each group of reflection points satisfies the pre-set condition when the first arrangement formed by the plurality of first light strips is the first pre-set arrangement, comprises:

    obtaining a second quantity of reflection points included in each of the first light strips when the first arrangement formed by the plurality of first light strips is the first pre-set arrangement;

determining that a first light strip associated with the second quantity that is greater than a second pre-set quantity as a standard light strip;

determining that each group of reflection points satisfies the pre-set condition when a ratio between a quantity of the standard light strips and a total quantity of the first light strips is within a pre-set ratio range.

10. The recharging method for the autonomous mobile device according to any of claims 1-9, **characterized in that**, wherein after determining the sub-zone in the search zone that reflects the laser as the candidate zone, the recharging method also comprises:

when all candidate zones are not the target zone, controlling the autonomous mobile device to move for a pre-set distance, and to return to execute the step of determining the search zone of the autonomous mobile device.

11. The recharging method for the autonomous mobile device according to any of claims 1-9, **characterized in that**, wherein after obtaining the rating score of the identifier, the recharging method also comprises:

when the rating score is not within a pre-set score range, repeating determination of the search zone based on the target zone, and returning to execute the step of emitting the laser toward the search zone.

12. An autonomous mobile device, **characterized in that**, comprising:

a determination module, configured to determine a search zone of the autonomous mobile device, and emit a laser toward the search zone;

wherein the determination module is configured to determine a sub-zone in the search zone that reflects the laser as a candidate zone;

wherein the determination module is also configured to determine a target zone based on the candidate zone, wherein, light intensities of reflected lights reflected by the identifier in the target zone are within a pre-set light intensity range, and to determine reflection points in the candidate zone, wherein, the reflection points are points where the laser impinging onto the identifier is reflected by the identifier, wherein light intensities of reflected lights corresponding to the reflection points are within the pre-set light intensity range;

an obtaining module, configured to obtain a rating score of the identifier, wherein, the rating score is obtained based on the determined light intensities of the reflected lights corresponding to the reflection points and based on weights of the reflection points.

13. An autonomous mobile device, **characterized in that**, comprising a storage device and a processor;

wherein the storage device is configured to store computer-executable instructions;

wherein the processor is configured to execute the computer-executable instructions stored in the storage device, to execute the recharging method for the autonomous mobile device according to any of claims 1-11.

14. A computer-readable storage medium, **characterized in that**, wherein the computer-readable storage medium stores computer-executable instructions, wherein when the computer-executable instructions are executed by a processor, the instructions implement the recharging method for the autonomous mobile device according to any of claims 1-11.

15. A computer program product, including a computer program, **characterized in that**, when the computer program is executed by a processor, the computer program implements the recharging method for the autonomous mobile device according to any of claims 1-11.

Light reflecting
zone of identifier

Laser

**FIG. 1**

| | |
|---|---|
| Determining a search zone of an autonomous mobile device, and emitting a laser toward the search zone | S10 |

↓

| | |
|---|---|
| Determining a sub-zone in the search zone that reflects the laser as a candidate zone | S20 |

↓

| | |
|---|---|
| Determining a target zone based on the candidate zone, including: determining reflection points in the candidate zone, wherein, the reflection points are points where the laser impinging onto the identifier is reflected by the identifier, wherein light intensities of reflected lights corresponding to the reflection points are within a pre-set light intensity range | S30 |

↓

| | |
|---|---|
| Obtaining a rating score of the identifier | S40 |

↓

| | |
|---|---|
| Determining the candidate zone as the target zone when the rating score is within a pre-set score range | S50 |

**FIG. 2**

Determining the rating score f based on the light intensities J of the reflected lights corresponding to the reflection points, a penalty value T, weights of the reflection points and a constant coefficient K, wherein the weights of the reflection points are Euclidean distances Range from the reflection points to an origin, wherein the origin is a first reflection point on the identifier

S211

$$f = \sum_{1}^{n} f_i \times Range_i = \sum_{1}^{n} J_i \times (1 - \frac{T}{K}) \times Range_i$$

S212

**FIG. 2-1**

Determining the rating score based on the light intensities corresponding to the reflection points and Euclidean distances Range from the reflection points to an origin

S221

$$f = \sum\nolimits_1^n f_i = \sum\nolimits_1^n [U_i - \frac{\sum_1^n J_i}{n}] \times Range_i$$

S222

**FIG. 2-2**

**FIG. 3**

Determining a first length of a straight line formed by the reflection points ⌐ S401

Obtaining the rating score of the identifier when the first length is within a pre-set length range ⌐ S402

**FIG. 4**

When a first quantity of the reflection points is greater than a first pre-set quantity — S501

Obtaining the rating score of the identifier — S502

**FIG. 5**

Reflection points

Light reflecting zone

Extracted geometric feature

**FIG. 6**

Determining a plurality of groups of reflection points in the candidate zone, wherein, light intensities of reflected lights corresponding to the reflection points in each group of reflection points are within a same light intensity range, the reflection points in each group of reflection points are adjacent to one another, light intensity ranges corresponding to two adjacent groups of reflection points are different, light intensities of reflected lights corresponding to the reflection points in each group of reflection points are within a pre-set light intensity range — S701

Determining whether each group of reflection points satisfies a pre-set condition — S702

Obtaining the rating score of the identifier — S703

**FIG. 7**

900

Processor 901

Storage device 902

Lidar device 903

**FIG. 8**

## INTERNATIONAL SEARCH REPORT

International application No.

**PCT/CN2023/092342**

**A. CLASSIFICATION OF SUBJECT MATTER**

G05D 1/02(2020.01)i

According to International Patent Classification (IPC) or to both national classification and IPC

**B. FIELDS SEARCHED**

Minimum documentation searched (classification system followed by classification symbols)

IPC: G05D G01C

Documentation searched other than minimum documentation to the extent that such documents are included in the fields searched

Electronic data base consulted during the international search (name of data base and, where practicable, search terms used)

CNTXT; CNKI; VEN; WOTXT; EPTXT; USTXT: 速感科技, 充电, 回充, 激光, 反光, 反射, 目标, 标识, 标志, 光强, 强度, 分数, 评分, 评价, 权重, 距离, 惩罚, 偏差, 偏离, 平均, 均值, 长度, 数量, 形状, 相似, 比值, 光条, 光带, robot, charging, target, reflect+, intensity, range, distance, weight, evaluat+, grade, error, loss, average, shape, ratio

**C. DOCUMENTS CONSIDERED TO BE RELEVANT**

| Category* | Citation of document, with indication, where appropriate, of the relevant passages | Relevant to claim No. |
|---|---|---|
| Y | CN 110109450 A (SHENZHEN EVA ROBOT TECHNOLOGY CO., LTD.) 09 August 2019 (2019-08-09) description, paragraphs [0002]-[0109], and figures 1-4 | 1, 4-8, 10-15 |
| Y | CN 112580630 A (SHANGHAI YOGO ROBOT CO., LTD.) 30 March 2021 (2021-03-30) description, paragraphs [0002]-[0061], and figures 1-9 | 1, 4-8, 10-15 |
| Y | CN 109674402 A (YUNJING INTELLIGENT TECHNOLOGY (DONGGUAN) CO., LTD.) 26 April 2019 (2019-04-26) description, paragraphs [0002]-[0254], and figures 1-21 | 8, 10, 11, 13-15 |
| A | CN 113189980 A (HUIZHOU TOPBAND ELECTRICAL TECHNOLOGY CO., LTD.) 30 July 2021 (2021-07-30) entire document | 1-15 |
| A | CN 113740872 A (HENAN MUYUAN INTELLIGENT TECHNOLOGY CO., LTD.) 03 December 2021 (2021-12-03) entire document | 1-15 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 August 2023** | **28 August 2023** |

| Name and mailing address of the ISA/CN | Authorized officer |
|---|---|
| China National Intellectual Property Administration (ISA/CN) China No. 6, Xitucheng Road, Jimenqiao, Haidian District, Beijing 100088 | |
| | Telephone No. |

Form PCT/ISA/210 (second sheet) (July 2022)

**INTERNATIONAL SEARCH REPORT**

| International application No. |
|---|
| **PCT/CN2023/092342** |

**C.    DOCUMENTS CONSIDERED TO BE RELEVANT**

| Category* | Citation of document, with indication, where appropriate, of the relevant passages | Relevant to claim No. |
|---|---|---|
| A | JP 2006047033 A (DAIHATSU MOTOR CO., LTD.) 16 February 2006 (2006-02-16) entire document | 1-15 |

Form PCT/ISA/210 (second sheet) (July 2022)

| INTERNATIONAL SEARCH REPORT<br>Information on patent family members | | International application No.<br>**PCT/CN2023/092342** |
|---|---|---|

| Patent document<br>cited in search report | | | Publication date<br>(day/month/year) | Patent family member(s) | Publication date<br>(day/month/year) |
|---|---|---|---|---|---|
| CN | 110109450 | A | 09 August 2019 | None | |
| CN | 112580630 | A | 30 March 2021 | None | |
| CN | 109674402 | A | 26 April 2019 | None | |
| CN | 113189980 | A | 30 July 2021 | None | |
| CN | 113740872 | A | 03 December 2021 | None | |
| JP | 2006047033 | A | 16 February 2006 | None | |

Form PCT/ISA/210 (patent family annex) (July 2022)

**REFERENCES CITED IN THE DESCRIPTION**

**Patent documents cited in the description**

- CN 202210635841